Europäisches Patentamt

European Patent Office

Office européen des brevets

(11) Publication number: **0 027 368**
**B1**

# (12) EUROPEAN PATENT SPECIFICATION

(45) Date of publication of patent specification: **30.07.86**

(21) Application number: **80303583.1**

(22) Date of filing: **10.10.80**

(51) Int. Cl.⁴: **G 01 N 27/72,** G 01 N 27/82,
B 65 G 43/00

(54) Method, apparatus and instrument for monitoring elongate magnetically permeable members.

(30) Priority: **15.10.79 AU 925/79**
**20.05.80 AU 3648/79**

(43) Date of publication of application:
**22.04.81 Bulletin 81/16**

(45) Publication of the grant of the patent:
**30.07.86 Bulletin 86/31**

(84) Designated Contracting States:
**DE FR GB IT SE**

(56) References cited:
**GB-A-1 539 313**
**GB-A-2 012 966**
**US-A-3 444 458**
**US-A-3 899 071**
**US-A-4 020 945**

(73) Proprietor: **COMMONWEALTH SCIENTIFIC AND
INDUSTRIAL RESEARCH ORGANIZATION
Limestone Avenue
Campbell Australian Capital Territory 2601 (AU)**

(72) Inventor: **Harrison, Alexander
15B Beecroft Road
Beecroft New South Wales 2119 (AU)**

(74) Representative: **McCulloch, Norman Little
Mathys & Squire 10 Fleet Street
London EC4Y 1AY (GB)**

Courier Press, Leamington Spa, England.

## Description

This invention seeks to provide an improved technique and instrument for monitoring gradual metal loss in cables, reinforced belts, rods and rails while they are in service, the metal loss being due to wear, corrosion, breakage or stretch — any reduction in metal section being taken as effective metal loss.

While the technique is an electromagnetic one and the invention will be described in relation to steel cables and rails, it is not confined thereto as it is applicable to monitoring loss of metals normally considered to be nonmagnetic, such as brass, but which become magnetically permeable under high-frequency electromagnetic fields. Also, while particular reference will be made to the detection of metal loss in conveyor belts, it will be clear that the invention is not limited thereto.

Conveyor belts commonly employed in the mining industry are formed from long strips of rubber or other elastomeric material within which longitudinal steel cables or cords are embedded. As the rubber surface wears or is damaged, the steel reinforcing is exposed to corrosion which is often difficult to detect by an examination of the surface of the belt, particularly while it is in use. To stop long conveyor belts for regular visual inspection, or to allow the belts to run until they break, is of course costly and it is common practice to discard belts after a given period of use, but much serviceable belt is discarded in this way. Similar dilemmas exist in regard to the inspection of steel haulage cables.

It is known that the breakage of steel strands or wires in haulage cables can be monitored electromagnetically while the cable is in use by magnetising it at one point and encircling it with a search coil at another point immediately "downstream" from the first to detect magnetic anomalies formed at strand breaks as they move through the detecting coil. Such anomalies have also been detected by propagating elastic waves along wire rope by the use of magnetostrictive transducers; see for example U.S. Patent No. 2 656 714. However, neither of these techniques are effective in monitoring the total mass of metal present or the gradual loss of metal through corrosion or wear.

Known alternating current techniques are, in general, based upon the generation of eddy currents in the cable by electromagnetic induction and the detection of these eddy currents through use of a search coil downstream of the electromagnet. Again, this technique is not sensitive to gradual metal loss and, moreover, is dependent upon the speed at which the test piece passes through the transducers relative to the rate at which the eddy currents decay. A technique of this type is described in Australian Patent No. 216676.

Not only do the above techniques have serious disadvantages when applied to individual wire ropes or cords, but they are quite inappropriate for application to conveyor belts of up to a metre or more in width and containing as many as 50 embedded reinforcing cords. It has been proposed (see U.S. Patent Numbers 4 020 945 and 3 899 071) to detect stretch and tears or other physical damage in such belts by incorporating magnets or conductive loops in the belt material during manufacture so that a transducer can be magnetically or inductively coupled thereto and, when the belt is torn and the magnet or loop broken, an alarm can be sounded. Not only are such belts expensive to manufacture, but the technique does not allow monitoring of gradual metal loss, stretching of splices or the monitoring of conventional belts.

It is also known from U.S. Patent No. 3,444,458 to sense the bulk properties of strip steel. In this specification coils 13 and 14 are located on the centre portion of a magnetic yoke 10 in order to ensure that all magnetic flux (including any fringing field) passes through the coils 13 and 14. However, in the present invention the yoke is differently arranged with the necessary windings being located one on each pole piece of a plurality of pole pieces. Furthermore, the magnetic yoke of the present invention extends transverse to the longitudinal axis of the magnetically permeable member. This is particularly important with conveyor belts since there may be only one or two defect cords in the entire conveyor belt and these cords may have a defect only at a particular location along the belt. The potential problems are thus highly localised. The invention overcomes this problem by the yoke location across the belt and this is in contrast to the problem which U.S. Patent No. 3,444,458 is addressing, namely a change in the chemical or metallurgical properties of strip steel which are detectable by a change in the magnetic properties in the strip. Since such a change of property is a bulk phenomenon and not highly localised, the single pair of pole pieces located above the strip, and the single pair of pole pieces located below the strip suffice. In the conveyor belt application this would clearly be insufficient.

Furthermore, the problems of the present invention relate to the conveyor belt art and the deterioration of· braided cables formed from a number of strands of steel buried within the rubber casing of a conveyor belt. Such cables, and wire rope in general, are formed from a number of individual components which are not in very good electrical contact with each other. This is similar to the insulated laminations of electric transformers. The reason such laminations are used is to reduce eddy currents and thus both the expectation, and the fact, is that multi-strand cables or cores within conveyor belts and the like do not produce easily detectable eddy currents when subjected to a time varying magnetic field.

It is also known from British Patent application No. 2,012,966 to sense for defects in wire rope by means of a magnetic technique. However, again in this arrangement the magnetic yoke is only provided with a pair of pole pieces and not a plurality of pairs of pole pieces and the field and sensing windings are located on the magnetic yoke itself rather than on the actual pole pieces. It is admitted this magnetic yoke construction results in a fringing magnetic field which results in some distortion.

Accordingly, the present invention seeks to provide both an apparatus for, and a method of, monitoring the integrity of an elongate magnetically permeable member in which which the particular construction of the magnetic yoke used gives rise to improved uniformity of the magnetic field produced thereby as will be explained in more detail hereafter.

According to one aspect of the present invention there is disclosed apparatus for monitoring the integrity of an elongate magnetically-permeable member having a longitudinal axis, said apparatus comprising a magnetically-permeable yoke for positioning adjacent said elongate member, said yoke having a U-shaped cross-section substantially parallel to said axis and having pole pieces aligned substantially parallel with said axis, a field winding, and a sensing winding; current generating means connected to said field winding to induce a time varying magnetic field passing through said elongate member between said pole pieces; sensing means connected to said sensing winding to sense the voltage induced therein by said magnetic field, spacing means (3) arranged to maintain a substantially predetermined space between said elongate member (11, 44) and said yoke (2, 40) and to permit relative movement therebetween in the direction of the longitudinal axis of said elongate member (11, 44); characterised in that said yoke (2, 40) extends substantially perpendicularly to said axis and has a plurality of pairs of pole pieces (5, 42) having field windings (6) and sensing windings (7), said plurality of pairs of pole pieces (5, 42) being formed by slots (4, 41), in said yoke (2, 40), and each said pair of pole pieces (5, 42) being aligned in a direction substantially parallel to the longitudinal axis of said elongate member, one pole piece of each pair of said pole pieces (5, 42) carrying one of said field windings (6) and the other pole piece of each pair of pole pieces (5, 42) carrying a corresponding one of said sensing windings (7).

According to another aspect of the present invention there is disclosed a method of monitoring the integrity of a conveyor belt (10) having a longitudinal axis and a plurality of elongate magnetically permeable reinforcing cords (11) and substantially parallel to said axis covered with non-magnetic material, said method being characterised by the steps of locating a magnetically permeable yoke (2) adjacent one surface of said conveyor belt (10), said yoke (2) having a substantially U-shaped cross-section in a direction substantially parallel to said longitudinal axis and extending substantially perpendicularly to said axis; forming a plurality of pairs of pole pieces (5) by slots (4) in said yoke (2), each pair of pole pieces being aligned in a direction parallel to said axis; providing one pole piece of each of said pair of pole pieces (5) with a field winding (6) and the other pole piece of each said pair of pole pieces with a corresponding sensing winding (7); causing relative movement between said conveyor belt (10) and said yoke (2) whilst maintaining a substantially constant spacing between said yoke (2) and said conveyor belt (10); supplying a time varying electric current to each of said field windings (6) to induce a time varying magnetic field between the pole pieces (5) of each pair of pole pieces, said magnetic field passing through said cords (11); and sensing changes in the voltage induced in each of said sensing windings (7) caused by changes in the reluctance path containing said yoke (2) and said cords (11).

In order to further portray the nature of the present invention, a few particular examples will be described by way of illustration only. In the following description reference will be made to the accompanying drawings in which:

Fig. 1 is a schematic perspective and partly cross-sectional view of the apparatus of the preferred embodiment,

Fig. 2 is a side elevation of the apparatus of Fig. 1,

Fig. 3 is a schematic cross-sectional view of the upper magnetic yoke of Figs. 1 and 2,

Fig. 4 is a block diagram of the electric sensing circuit used in conjunction with the apparatus of Figs. 1 to 3,

Fig. 5 is a circuit diagram of the input interface block 16 of Fig. 4,

Fig. 6 is a circuit diagram of blocks 17 and 18 of Fig. 4,

Fig. 7 is a circuit diagram of the differentiator block 19 and the latch block 20 of Fig. 4,

Fig. 8 is a circuit diagram of the power supplies block 21 of Fig. 4,

Fig. 9 is a graph of the output of the circuit of Fig. 6 as a function of time illustrating conveyor belt signature,

Fig. 10 is a graph similar to Fig. 9 but with increased chart recorder speed,

Fig. 11 is an X-ray result illustrating the splices indicated in Fig. 10,

Fig. 12 is a graph of the actual cord number as revealed by the X-ray of Fig. 11,

Fig. 13 is a graph of the output of the circuit of Fig. 6, illustrating by corrosion signature the condition of a small portion of a conveyor belt,

Fig. 14 is a graph similar to Fig. 13 but illustrating by corrosion signature the same portion of the belt illustrated in Fig. 10,

Fig. 15 is a graph similar to Fig. 14 but with increased chart recorder speed,

Fig. 16 is a schematic perspective view of apparatus of another embodiment used to measure wear of steel cables.

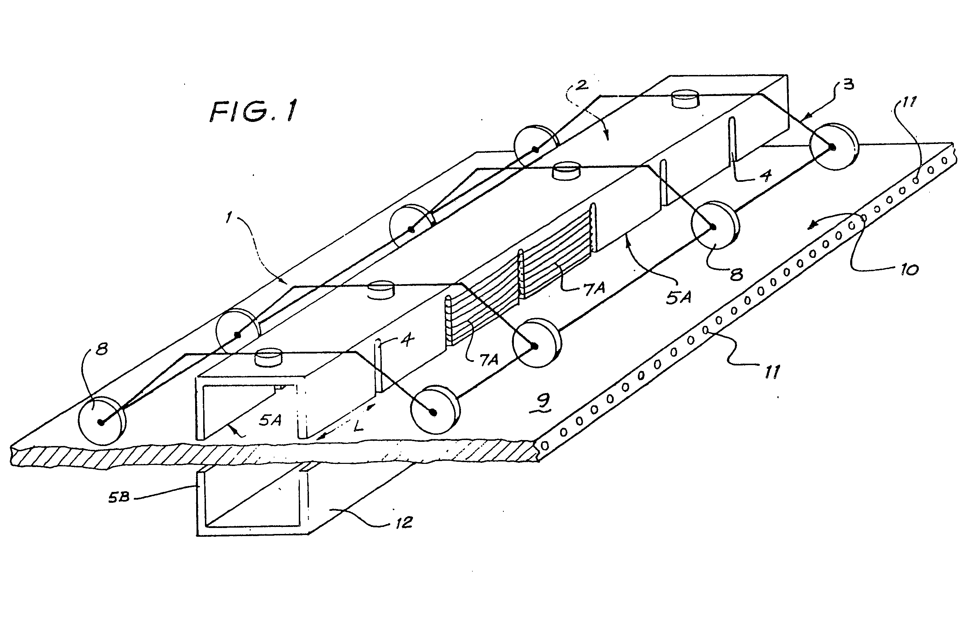

Referring now to Figs. 1, 2, and 3, the apparatus of the preferred embodiment comprises a transducer assembly 1 formed from an upper magnetic yoke 2 of soft iron which is suspended below a wheeled carriage 3. The yoke 2 is formed from an inverted U-shaped channel member which has a plurality of slots 4 located at regularly spaced intervals in each of its side walls thereby forming a plurality of pole pieces 5. Each pole piece 5 carries either a field winding 6 or a sensing winding 7.

The carriage 3 is formed from heavy materials such as brass and is supported by a plurality of wheels 8 so that the pole pieces 5 are spaced a predetermined distance, from the upper surface 9 of a conveyor belt 10 having a plurality of longitudinally extending steel reinforcing cords 11.

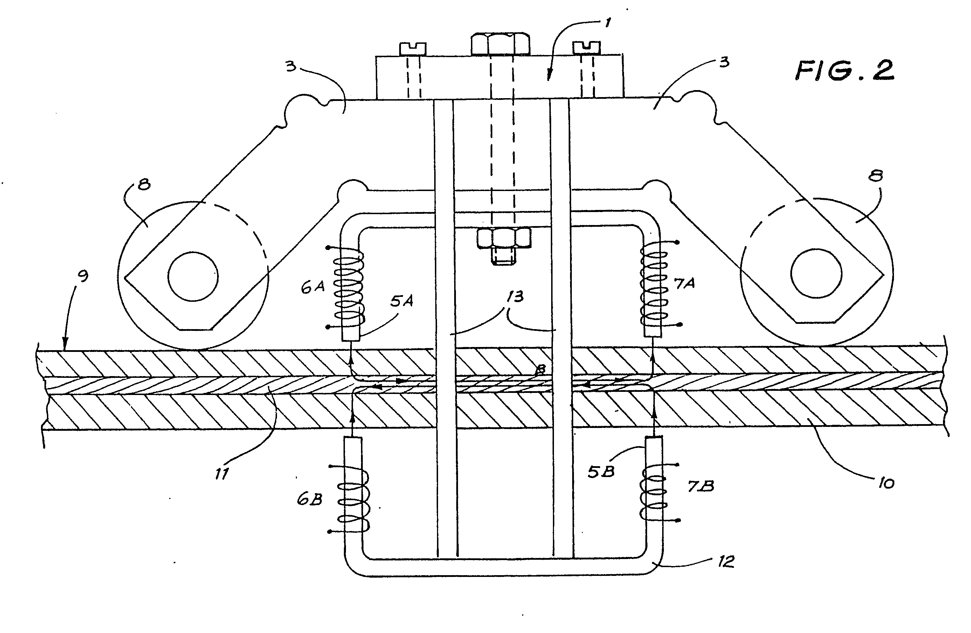

A lower yoke 12 substantially identical with the upper yoke 2, is suspended from the carriage 3 by supports 13 (Fig. 2) located at each end of the transducer assembly 1. Like parts of the two yokes 2 and 12 are designated A and B respectively through the specification and drawings. As will become apparent from the description hereafter relating to conveyor belt signature analysis, both yokes are not essential to the present invention, since only one yoke is required for conveyor belt signature and analysis.

The transducer assembly 1 is preferably located on the return run of the conveyor so that the upper yoke 2 is therefore located above the upper (clean) surface of the return run of the conveyor and between the forward and return runs of the conveyor. The lower yoke 2 is thus located below the return run of the conveyor.

The conveyor belt 10 is normally fabricated from non-magnetic material such as rubber or an elastomeric polyurethane. Preferably the dimension of the pole pieces 5A and 5B are such that approximately 10 of the cords 11 pass under each pole piece 5. The slots 4 reduce lateral eddy currents in the yokes 2 and 12 thereby resulting in better uniformity of the magnetic field distribution between the pole pieces 5A and 5B.

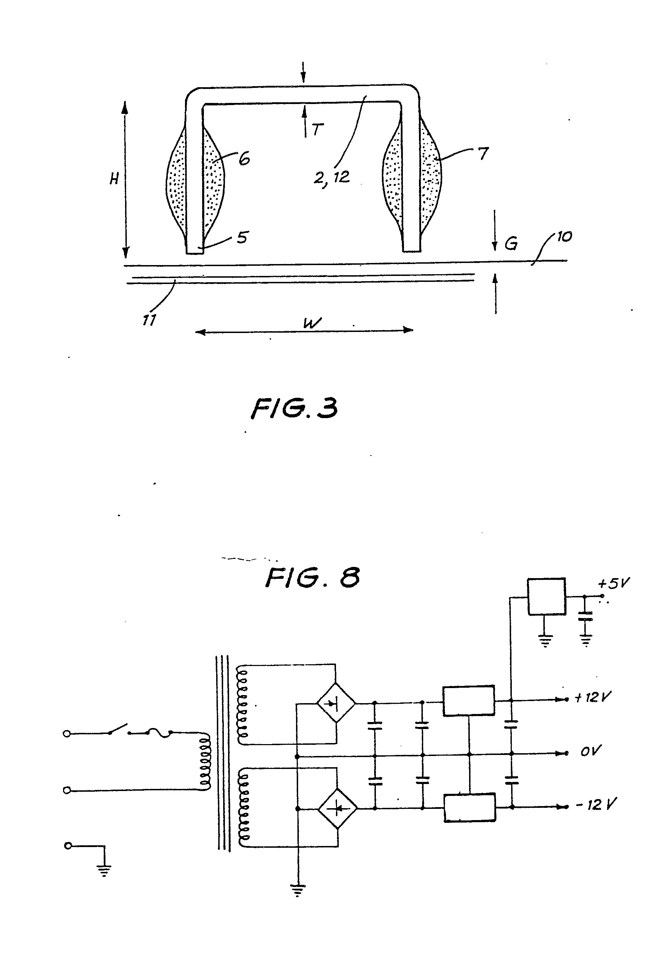

As seen in Fig. 3 the dimensions of each yoke 2 and 12 are preferably inter-related so that the yokes can be scaled to any size. Thus, for a width W for the yokes 2 and 12, the thickness T of the high permeability material from which the yoke is made, the pole length L (Fig. 1), the height H and the gap G between the pole piece and the magnetic material (not just the air gap) are inter-related.

As a rough "rule of thumb" H is approximately one half of W, T is approximately one tenth H, L is approximately one and three quarters W, and G is approximately one fifth W. Each winding 6, 7 is wound for a maximum flux density in the yoke 2, 12.

Not only can the yoke of the preferred embodiment be scaled to any size but the shape of the yoke can be altered so that, for example, Fig. 3 could represent a section through a curved or toroidal yoke used to test tubular rubber pipe or steel cable.

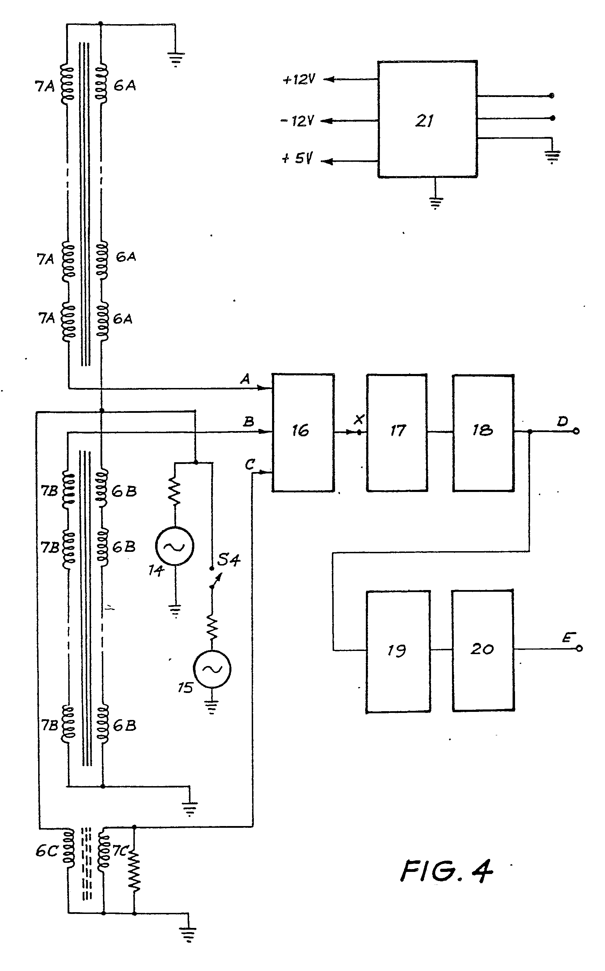

Turning now to Fig. 4, the field windings 6A and 6B are respectively connected together in series across an AC supply which preferably comprises a 5 kHz sine wave oscillator 14 having an output of approximately 1 Vpp per field winding 6. However, the oscillator frequency can vary between 50 Hz and 50 kHz to suit the particular magnetically permeable member. In addition, a d.c. bias can be supplied to the field windings 6A and 6B by any conventional means (not illustrated) so that unidirectional current rather than alternating current flows in the field of windings 6A and 6B. However a time varying magnetic field is still created thereby. Another sine wave oscillator 15 is able to be connected, via switch S4, in parallel with oscillator 14 to produce an amplitude modulated output as will be explained hereafter. Each of the sensing windings 7A and 7B are respectively connected together in series. One end of each series connection is grounded and the other ends respectively provide inputs A and B from the upper yoke 2 and the lower yoke 12 to an input interface block 16.

In the preferred embodiment, a single field winding 6C and a single sensing winding 7c are also provided to permit the continuity of a single cord or the rubber wear profile to be detected. The output of single sensing winding 7C provides input C for input interface block 16.

With switch S4 open, the outputs of the sensing windings 7A, 7B comprise an amplitude modulated sine wave, the amplitude of which depends on the reluctance of the magnetic path (s) existing at any given time between each pair of pole pieces 5A, or 5B. The sine waves for each yoke are added in phase and pass through the input interface block 16 to the amplitude demodulator and null balance block 17, the output of which comprises a DC signal. The magnitude of this DC signal is a direct indication of the reluctance between the pole pieces 5 as a function of time. The reference potential of the DC signal is set by the block 17.

The output of the amplitude demodulator and null balance block 16 is passed through a gain and offset block 17. The output D from the gain and offset block 17 is compatible with an analog chart recorder (not illustrated).

The output of the gain offset block 18 is also passed via a differentiator block 19 to latch block 20, the output of which provides a digital output E comparable with the analog indication provided by the output D block 18.

A power supplies block 21 converts the AC mains supply into a plurality of DC supply voltages which are then used where necessary throughout the circuit.

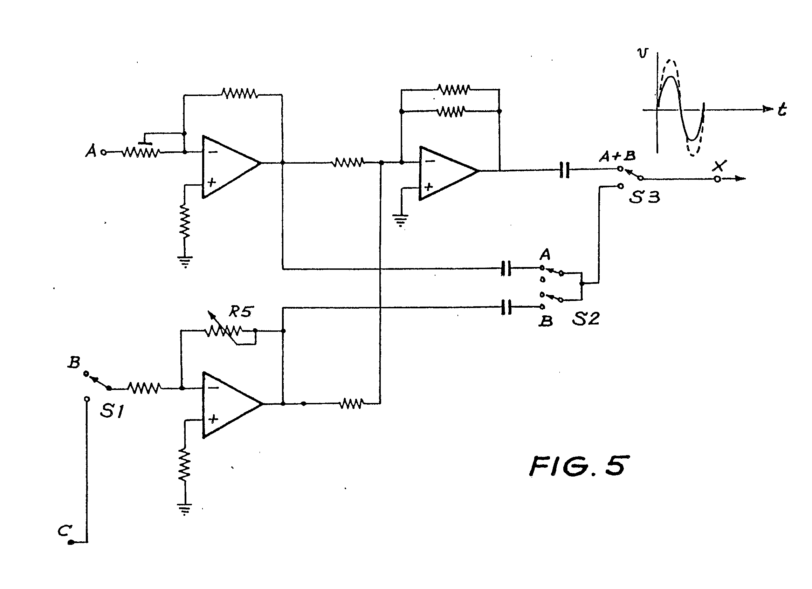

Fig. 5 illustrates the circuit details of the input interface block 16. Three switches S1, S2 and S3 are provided to permit the selection of any one of four possible signals to the amplitude demodulator and null balance block 17. These four signals are the output A from the sensing windings 7A of the upper yoke 2, the output B from the sensing windings 7B of the lower yoke 12, the sum of outputs A and B, and the output C from the single sensing windings 7C. Three operational amplifiers are used to provide some gain as well as some degree of isolation.

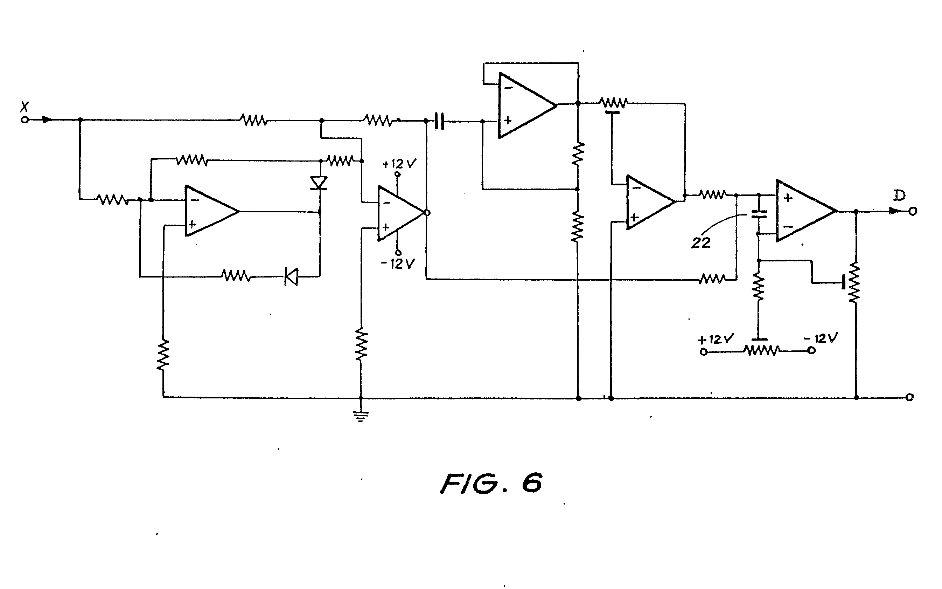

The circuit details of the amplitude demodulator and null balance block 17 are illustrated in Fig. 6, the circuit of the preferred embodiment incorporating five operational amplifiers. The last of these operational amplifiers preferably has a capacitor 22 connected (as illustrated) across the inputs of the operational amplifier. The capacitor 22 is of great assistance in removing vibrational noise from the output D.

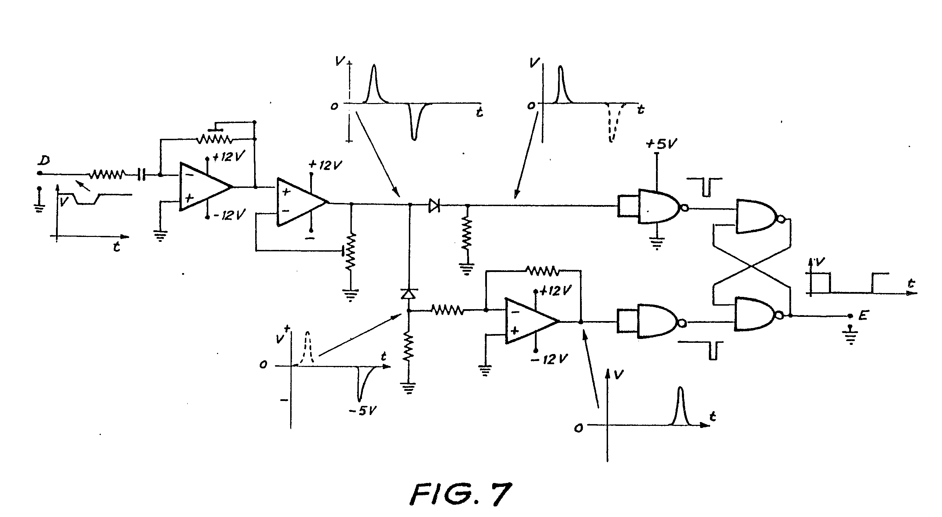

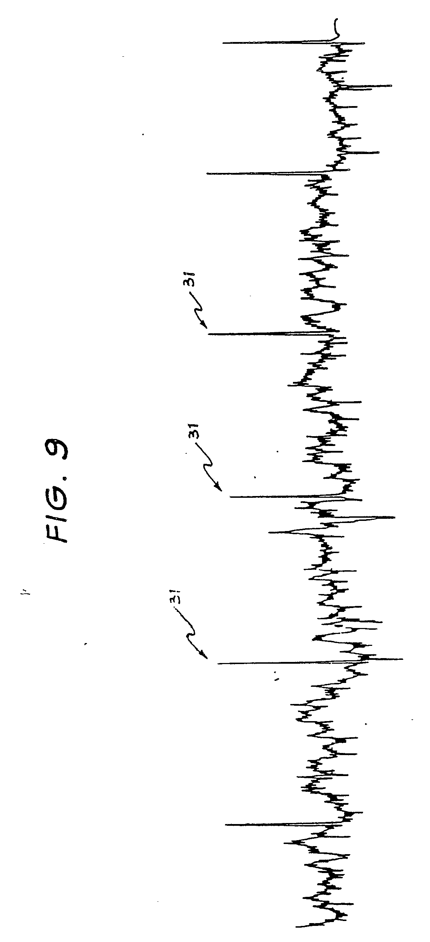

Fig. 7 illustrates the circuit details of the differentiator block 19 and latch block 20 which, in the preferred embodiment, together include three differential amplifiers and four NAND gates. Similarly, Fig. 8 illustrates the circuit details of the power supplies block 21 which incorporates a mains isolation transformer, two diode bridges, and three integrated circuits.

In operation, the belt 10 typically travels at a speed of approximately 3 M/sec. and therefore the time taken for a particular point on the belt 10 to pass between adjacent pole pieces 5A or 5B is of the order of 100 ms. As indicated in Fig. 2, the magnetic field B produced by the field windings 6A, 6B, 6C passes longitudinally through the cords 11 between the pole pieces 5A, 5B. Where the steel cord 11 is intact, that is, its continuity has not been destroyed by a mechanism break or chemical corrosion, the reluctance of the magnetic path comprising the steel cord 11 and yoke 2 is relatively low and therefore the output of the sensing windings 7A, 7B or 7C is high. However, should the steel cord 11 be broken or corroded, the reluctance of the magnetic path is greatly increased and therefore the output of the sensing windings is correspondingly decreased.

The changes in the magnitude of the output of the sensing windings are reflected in the amplitude of the sine wave applied to the amplitude demodulator and null balance block 17. These changes in amplitude modulation are reflected in a change of the level of the output of the amplitude demodulator and null balance block 17 which results in a corresponding change in the amplitude of the output D of the gain and offset block 18.

With switch S4 closed, the output of oscillator 15 is mixed with the output of oscillator 14 so as to produce a resultant amplitude modulated signal which is applied to the field windings 6A, 6B. Preferably the modulation is 800 Hz on 5 kHz with 20% peak-to-peak modulation giving a modulation index of 0.2. However, modulation of the carrier frequency with a frequency of the order of 20% of the carrier frequency is sufficient.

The effect of an amplitude modulated signal being applied to the field windings 6A, 6B is to greatly reduce the electrical noise produced in the sensing windings 7A, 7B because of the vibration of the belt 10 towards and away from the pole pieces 5A, 5B as the belt travels. This effect is brought about because the output of the sensing windings is respectively increased and decreased as the belt 10, and hence cords 11, approach and recede from the pole pieces 5. At the same time the magnetic field penetrates into the belt 10 by a degree which varies in accordance with the instantaneous modulation amplitude.

However, the output of the sensing winding 7 does not directly reflect the modulation frequency due to the dependence on the output of the amount of steel cord 11 in the path of any particular line of magnetic flux passing between the poles 5.

Thus where an appreciable length of cord 11 lies in the magnetic flux path, small movement of either the cord 11 or the flux in response to vibration or modulation respectively will only have a negligible effect on the output of sensing winding 7.

However, where the flux nearly, or only just, links a cord 11 then small movements of the cord 11 or small changes in the flux penetration will significantly alter the reluctance of the magnetic path. The net result of this action is to smooth the output of the sensing winding 7 by damping relatively high frequency changes caused by vibration of the belt 10. Reductions in vibrationally caused noise of the order of 50% have been achieved.

The output D for signal A recorded at a relatively slow speed is illustrated in Fig. 9. Adjacent sections of the belt are indicated by adjacent peaks 31 in Fig. 9. The peaks 31 are caused by the additional steel present at the splice which joins each pair of adjacent belt sections.

It will be appreciated by those skilled in the art, that since the belt 10 is moving relative to the transducer assembly 1, the graph illustrated in Fig. 9 in fact represents a "map" of the belt 10 which is termed a "conveyor belt signature". The analog signal of output D indicated in Fig. 9 is also passed through the differentiator block 19 and thence through latch block 20 in order to provide a pulse at each time that the amplitude of the analog signal changes in a step-wise fashion. The pulses are then used to trigger a set-reset flip flop in order to provide a digital output E which is substantially comparable with the analog output illustrated in Fig. 9.

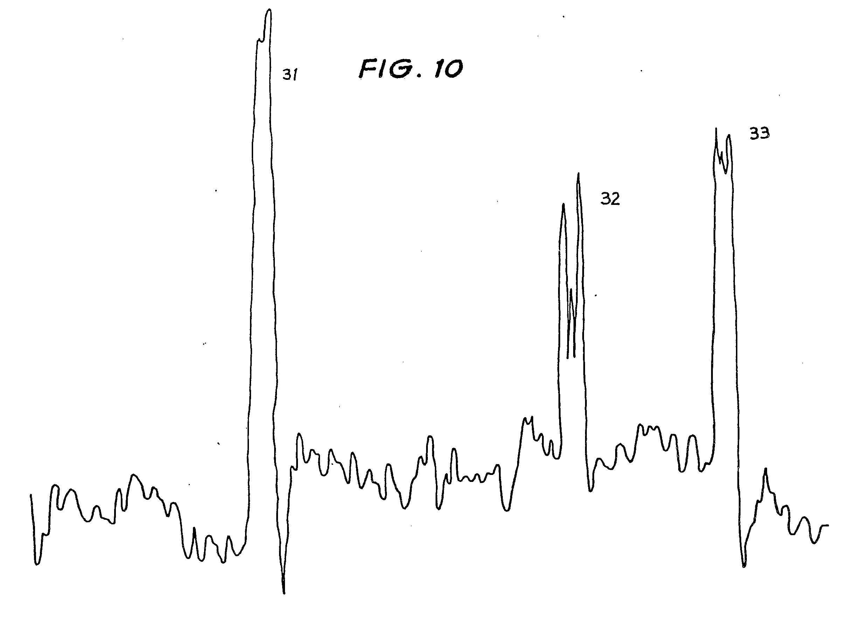

The graph illustrated in Fig. 9 is the result of operating the chart recorder at a low speed so that a relatively large portion or length of the conveyor belt is illustrated in the graph. If the chart recorder is operated at a faster speed, a much shorter length of the conveyor belt corresponds to an equivalent length of graph. This is the situation illustrated by the graph of Fig. 10 in which the output A of only sensing windings 7A is selected by means of switches S2 and S3 of Fig. 5 so as to produce a corresponding output D which is then graphed.

Commercially available conveyor belts are made up from a number of sections typically of the order of 300 m in length which are spliced together to form a continuous belt. In addition, the sections are often repaired by cutting out a portion and splicing in a new portion. As seen in Fig. 10, each of these splices in the belt results in a peak. Thus the "conveyor belt signature" graph of Fig. 10 includes three peaks 31, 32 and 33 which indicate three adjacent splices in the belt. Fig. 10 also indicates the condition of the reinforcing cords within the belt. The graph of Fig. 10 provides an excellent visual record of the nature of the splices in the belt. Thus because the peaks 31 and 33 of Fig. 10 have a substantially uniform amplitude, this is indicative of a uniform overlap of the steel cords within the splice so that the reluctance of the conveyor belt is substantially constant for the length of the splice. However, this is not the case for the splice corresponding to peak 32 and since the amplitude of the peak 32 is greatly reduced at two positions within the peak 32, it is clear that at the corresponding two locations within the conveyor belt there is not an acceptable degree of overlap of the steel cord within the splice. Thus the strength of the splice is substantially reduced and Fig. 10 can be regarded as illustrating three splice signatures in the form of three peaks.

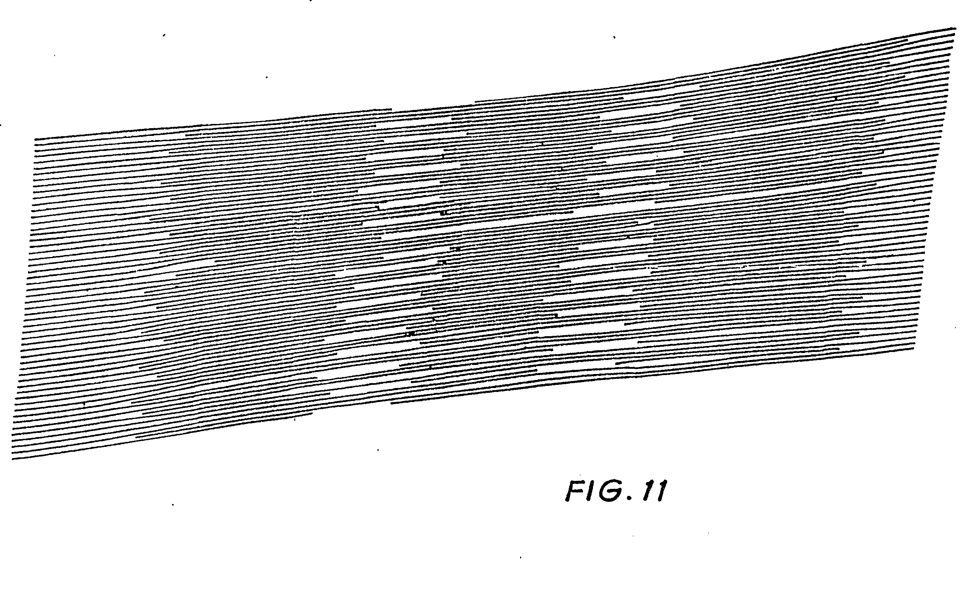

The results of X-ray analysis of the conveyor belt splice which corresponds to peak 32 of Fig. 10 are illustrated in Fig. 11. To the left and the right of Fig. 11 can be seen the spaced steel cords within the unspliced portions of the conveyor belt which are illustrated immediately to the left and right respectively of the peak 32 of Fig. 10. The three regions of high amplitude of peak 32 correspond to the three regions of overlapping cords illustrated in Fig. 11 and these three regions are separated by means of two other regions of very substantially reduced numbers of reinforcing cords. The type of splice corresponding to peak 32 is termed a 3-stage splice. These two regions correspond to the two regions of low amplitude contained within the peak 32. The two weakened regions within the splice have substantially reduced the strength of the conveyor belt and the belt, being under tension, has begun to neck, or reduce in width, at the location of the defective splice corresponding to peak 32. This can be seen from a consideration of Fig. 11 where the width of the conveyor belt is reduced in the centre of that portion of the conveyor belt which is X-rayed.

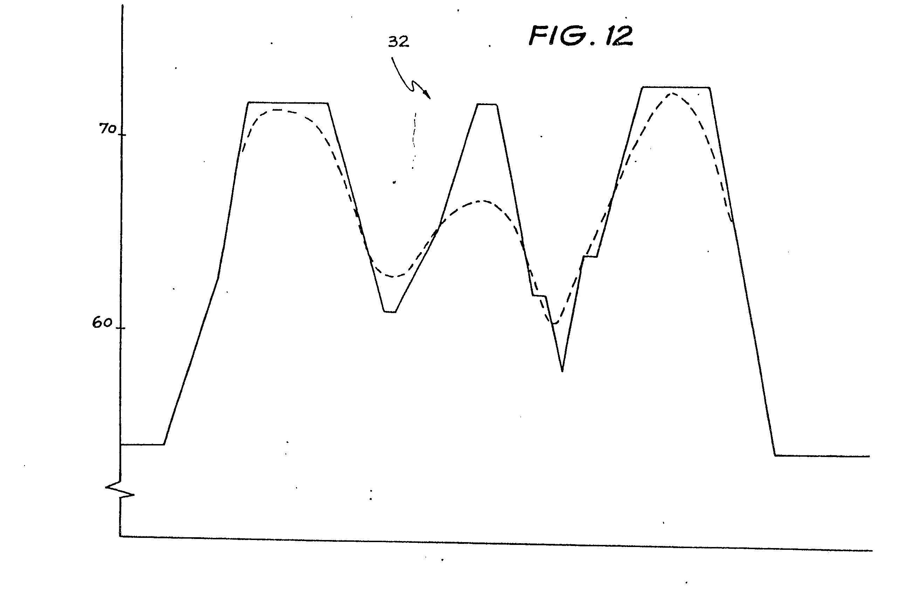

Fig. 12 shows a graph of the cord density of the peak 32 of Fig. 10 as determined by actually counting the cords revealed by the X-ray of Fig. 11. The solid line in Fig. 12 shows the actual counter numbers of cords whilst the broken line indicates the expected graph produced by a chart recorder which, of necessity, must possess some inertia. Bearing in mind the differences in scale between Figs. 10 and 12, it is clear that there is excellent correlation between the broken line of Fig. 12 and the graph of Fig. 10.

The distance between adjacent peaks 32 and 33 of Fig. 10 corresponds to approximately 20 m which length was inserted into the conveyor belt in order to repair same. However, subsequent analysis of the repair in accordance with the foregoing has indicated that one of the splices of the repair was faulty. Thus, such faulty splice work is able to be determined at the time of making the repair and therefore a defective repair can be corrected on the one occasion at which the belt is stopped. This is far better than stopping the belt for a repair and then a short time later incurring the economic cost of a further stoppage to correct a further fault in the conveyor belt brought about by failure of one of the splices in the repair.

Since the conveyor belt must be stopped in order to X-ray the belt, and this procedure is slow, cumbersome and expensive, the graph of Fig. 10 provides a particularly valuable tool for the analysis of splices in conveyor belts. In particular, for each peak, the area under the curve of the peak is approximately proportional to the strength of the splice and hence is proportional to the safety margin of the splice. Therefore a simple graphical analysis, rather than a cumbersome and expensive X-ray, can be used to determine whether or not a particular splice should be accepted or replaced.

The conveyor belt signature of a conveyor belt is unique and will be reproduced each time the conveyor belt passes under the upper yoke 2, after each complete revolution of the belt. Thus a signature in the form of graph 10 may be taken at different times for the same belt and the various signatures compared. If there has been no corrosion in the belt and also no substantial wear of the rubber covering of the belt, then the signatures taken at different times will be substantially identical. Thus any marked change in the amplitude of the conveyor belt signature can be used as an early warning that the condition of the belt has deteriorated and therefore failure is likely unless steps are taken to repair that location of the belt.

Since the graphs of Figs. 9 and 10 are directly proportional to the reluctance between the pole pieces 5A, it will be apparent to those skilled in the art that as the rubber covering of the belt wears, so the steel reinforcing cords within the belt will be spaced more closely to the pole pieces 5A thereby decreasing the reluctance of the magnetic path between the pole pieces 5A. Thus conveyor belt signatures taken at different times provide a measure as to the degree of wear of the rubber covering of the belt since the change in reluctance of the belt brought about by wear of its rubber covering will be very much less than the change in reluctance of the belt brought about by corrosion or breakage of the reinforcing cords.

A problem arises, however, in relation to conveyor belts for which there is no previous conveyor belt signature with which the graphs of Figs..9 and 10 can be compared. In the absence of such a comparison one cannot be certain that a change in the amplitude of the graph (and hence belt reluctance) has been caused by a change in the condition of the reinforcing cords or caused by, for example, a patch of abnormally high rubber wear.

In order to overcome this problem, the lower yoke 12 is provided and the two signals A and B are added together in anti-phase. It would be apparent to those skilled in the art that if the upper surface of the conveyor belt is worn, then the steel reinforcing cords will be closer to pole pieces 5A but further away from pole pieces 5B. Thus the reluctance between pole pieces 5A will be decreased whereas the reluctance between pole pieces 5B will be increased by a corresponding amount.

Thus, adding the signals A and B in anti-phase automatically compensates for changes in the thickness of the rubber covering caused by wear. In addition, this procedure also overcomes changes in reluctance caused by the fact that the steel cords may not at all times be centrally located within the belt at the time of its manufacture. This manufacturing defect can produce changes in the graphs 9 and 10 of the conveyor belt signature which are capable of being misinterpreted as due to corrosion in the steel cords.

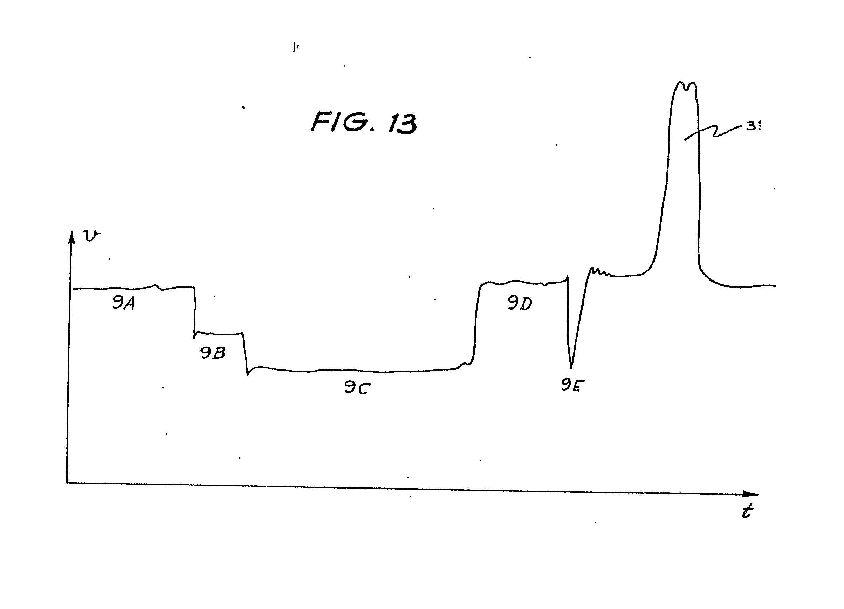

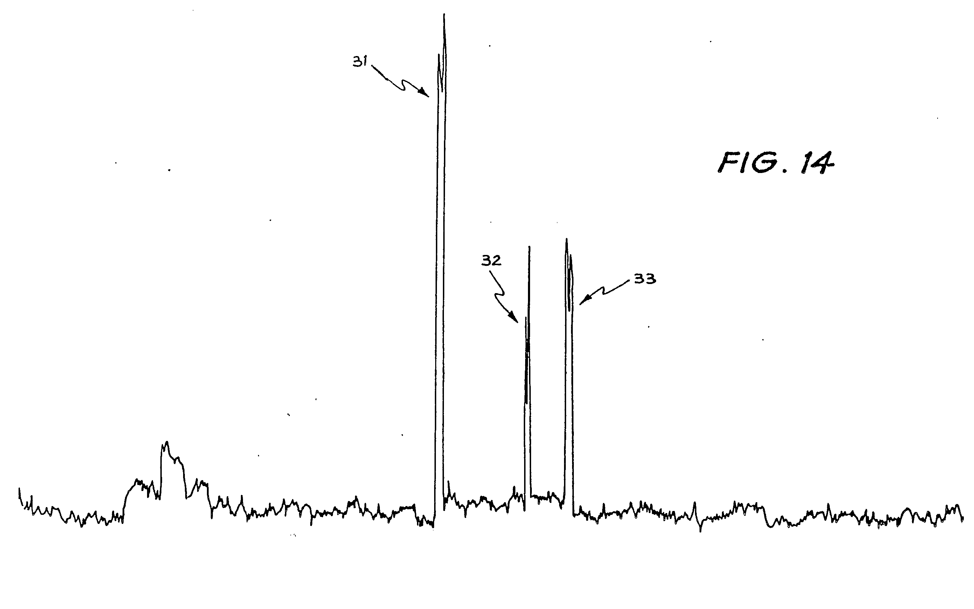

Figs. 13 and 14 are graphs illustrating the output D of Fig. 6 in the situation where switches S1 to S3 of Fig. 5 are connected so as to provide the summed output of A and B.

The output D for signal A + B (with signal A and signal B both being identically calibrated by use of potentiometer R5 of Fig. 5) recorded at relatively high speed on a chart recorder as a function of time is illustrated in Fig. 13. The first portion 9A of the trace indicates that none of the cords have been corroded, the second portion 9B indicates that 6 cords of the total of approximately 60 or 70 cords in the belt are corroded. The next portion 9C indicates that 11 cords of the belt are corroded and therefore this portion of the belt should be replaced since it is likely that this portion of the belt will fail in the near future. The next portion 9D indicates that none of the cords are corroded whilst the next portion 9E indicates that there is a relatively short break in many of the cords, and so on. A splice 31 joining adjacent portions of the belt is also shown. The duration of portion 9C corresponds exactly to a length in the belt 10 which should be replaced. In order to determine the precise location of the length to be replaced it is necessary to correlate the start of the chart recording with the initial portion of the belt 10 to pass under the transducer assembly 1, usually a splice is marked as a reference.

In Fig. 14 the chart recorder is operated at a slower speed than in Fig. 13 and also in respect to the same pieces of belt as is the subject of Fig. 10. The graphs of Figs. 13 and 14 are termed corrosion signatures since although peaks 31, 32 and 33 of Fig. 10 are clearly shown in Fig. 14, the variation in the output brought about by rubber wear in Fig. 10 has been eliminated in Fig. 14.

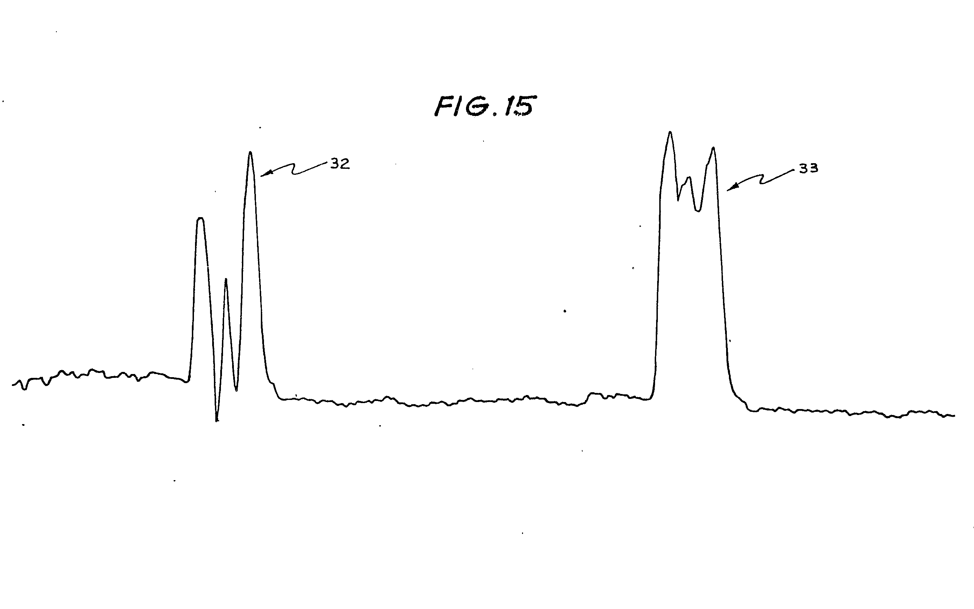

Fig. 15 is a graph similar to Fig. 14 save that the chart recorder is operated at a higher speed. Again the same portion of conveyor belt is used so that peaks 32 and 33 are again produced. The relatively flat portions of the graph of Fig. 15 between the peaks 32 and 33 indicate that none of the cords in the belt are corroded and that the only defect in the belt is the faulty splice corresponding to peak 32.

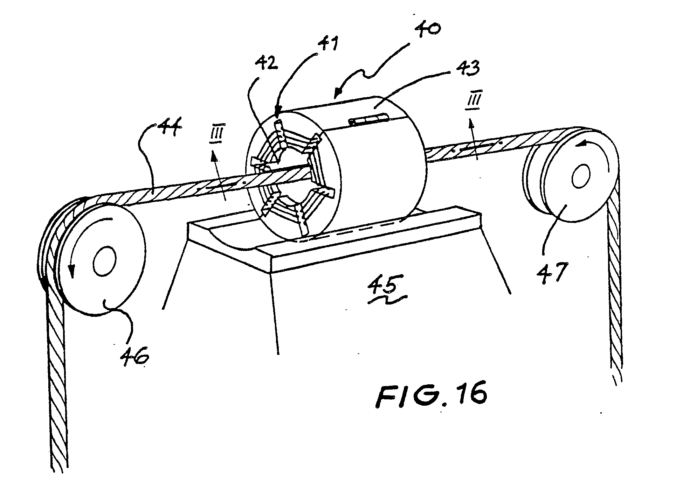

Turning now to Fig. 16, an annular embodiment of the present invention useful for testing cylindrical bodies such as steel cables, coated steel cables, rubber tubes with steel reinforcing cables, and even concrete beams and columns with steel reinforcing rods.

In the embodiment illustrated in Fig. 16 an annular yoke 40 is formed by bending a piece of U-shaped iron channel to form an annulus. A plurality of radial slots 41 are cut in the yoke 40 to form pole pieces 42 which carry field and sensing windings 6, 7 as before. The yoke 40 is preferably formed from two semi-circular pieces connected together by a hinge 43. Thus a view taken along the line III—III of Fig. 16 will resemble Fig. 3.

The hinge 43 permits the yoke 40 to be opened and placed over a steel cable 44 so that the cable 44 is substantially co-axial with the yoke 40, which is supported by any convenient structure 45. The cable 44 can be either bare or covered by means of a coating of plastics, rubber tar or the like. Such cables find wide application in cranes, winches and other such apparatus. Since these cables carry a heavy load during operation, it is very desirable to know if any of the steel strands (not illustrated) from which the cable 44 is formed, are broken, or worn, or abraded or plastically deformed thereby indicating probable imminent cable failure.

In order to permit relative movement between the yoke 40 and cable 44, it is desirable to locate the yoke 40 between two pulleys 46 and 47 so that the cable 44 can pass over the pulleys 46, 47 whilst still remaining substantially co-axial with the yoke 40. In this way substantially all of the cable 44 can be passed through the yoke 40.

During this operation, the reluctance path of the yoke which includes a sound cable will be substantially constant and therefore the output of the sensing windings will also be substantially constant. However, where one or more strands of the cable are broken or worn, then the cable reluctance is changed resulting in a changed sensing winding output. Furthermore, wear of bare cables with time so that the overall diameter of the cable is decreased can also be detected due to increased reluctance of the cable produced by its reduced cross-sectional area.

The foregoing describes only some embodiments of the present invention and modifications, obvious to those skilled in the art, may be made thereto without departing from the scope of the present claims. For example, the integrity and depth of steel reinforcing rods embedded in concrete columns and beams can be determined by passing the carriage 3 containing only the upper yoke 2 over the surface of the concrete column or beam and obtaining an output as described above. Such an output will be indicative of the condition of the steel reinforcing within the concrete member and hence indicative of the strength of the member. Similarly, a toroidal yoke as illustrated in Fig. 16 can be used to test the integrity and continuity of steel reinforcement within cylindrical or tubular non-magnetic bodies such as cylindrical columns of reinforced concrete or rubber tubing reinforced with steel cords.

## Claims

1. Apparatus for monitoring the integrity of an elongate magnetically-permeable member having a longitudinal axis, said apparatus comprising a magnetically-permeable yoke for positioning adjacent said elongate member, said yoke having a U-shaped cross-section substantially parallel to said axis and having pole pieces aligned substantially parallel with said axis, a field winding, and a sensing winding; current generating means connected to said field winding to induce a time varying magnetic field passing through said elongate member between said pole pieces; sensing means connected to said sensing winding to sense the voltage induced therein by said magnetic field, spacing means (3) arranged to maintain a substantially predetermined space between said elongate member (11, 44) and said yoke (2, 40) and to permit relative movement therebetween in the direction of the longitudinal axis of said elongate member (11, 14); characterised in that said yoke (2, 40) extends substantially perpendicularly to said axis and has a plurality of pairs of pole pieces (5, 42) having field windings (6) and sensing windings (7), said plurality of pairs of pole pieces (5, 42) being formed by slots (4, 41) in said yoke (2, 40), and each said pair of pole pieces (5, 42) being aligned in a direction substantially parallel to the longitudinal axis of said elongate member, one pole piece of each pair of said pole pieces (5, 42) carrying one of said field windings (6) and the other pole piece of each pair of pole pieces (5, 42) carrying a corresponding one of said sensing windings (7).

2. Apparatus as claimed in claim 1 characterised in that said yoke (40) is annular, said slots (41) are substantially radial and said pole pieces (42) define an interior substantially co-axial cylindrical cavity adapted to receive said elongate magnetic member (44).

3. Apparatus as claimed in claim 2 characterised in that said yoke (40) is formed from at least two sections movable (43) with respect to one another so that said yoke can be opened and closed to place said yoke (40) around said elongate magnetic member (44).

4. Apparatus as claimed in claim 1 characterised in that said yoke (2) comprises a substantially straight U-shaped channel with said slots (4) being cut in the sides thereof to form said pairs of pole pieces (5).

5. Apparatus as claimed in claim 4 characterised in that said field windings (6) are connected together in series across said current generating means (14) and said sensing windings (7) are connected together in series across said sensing means (16, 17).

6. Apparatus as claimed in claim 4 or 5 characterised in that said elongate permeable member comprises a conveyor belt (10) having elongate permeable reinforcing members (11) and said spacing means comprises a wheeled carriage (3) carying said yoke (2) and adapted to be positioned on one surface of said conveyor belt (10) and supported thereby with said yoke (2) extending transversely across said belt (10).

7. Apparatus as claimed in claim 6 characterised in that said carriage includes a further, substantially identical yoke (12), said yoke (2) and said further yoke (12) being substantially parallel with said further yoke (12) being located adjacent to the other surface of said belt (10).

8. Apparatus as claimed in claim 7 characterised in that said sensing means (16) adds the output of all said sensing windings (7) together with the output of the sensing windings (7B) of said further yoke (12) being added in anti-phase.

9. Apparatus as claimed in any one of claims 1 to 8 characterised in that said current generating means comprises an oscillator (14) having a frequency of from 50 Hz and 50 kHz.

10. Apparatus as claimed in claim 9 characterised in that the output of said oscillator (14) is amplitude modulated.

11. Apparatus as claimed in claim 9 or 10 characterised in that said sensing means (17) is tuned to the frequency of said oscillator (14) and comprises an amplitude detector (17).

12. Apparatus as claimed in claim 11 wherein said sensing means includes a logic circuit (19, 20) having a digital output dependent upon the reluctance of said magnetically permeable member (11).

13. Apparatus as claimed in any one of claims 4 to 12 characterised in that each said pair of pole pieces (5) comprises a generally rectangular portion of said yoke (2), and has a substantially constant thickness (T), wherein the height (H) of each said pole piece (5) is approximately half the distance (W) between said pole pieces, the thickness (T) of said portion is approximately one tenth of said height (H), the length (L) of each said pole piece (5) substantially perpendicular to said axis is approximately one and three quarters times said distance (W) between said pole pieces (5); and said predetermined space (G) between said pole pieces (5) and said elongate member (11) is approximately one fifth of said distance (W) between said pole pieces (5).

14. Apparatus as claimed in any one of claims 1 to 13 characterised in that said elongate magnetically permeable member (11, 44) is covered with non-magnetic material.

15. Apparatus as claimed in claim 9 characterised in that said sensing means comprises an a.c. detector circuit (16) connected to the sensing windings (7) for detecting the fall of the induced voltage below a predetermined level for a predetermined time.

16. Apparatus as claimed in claim 15 characterised in that said a.c. detector circuit (16) comprises an integrator circuit for integrating said induced voltage over an extended period of time to establish a reference signal level, a comparator for comparing said reference level with the substantially instantaneous induced voltage, and output means for signifying when said substantially instantaneous induced voltage falls below the reference level by a predetermined degree.

17. A method of monitoring the integrity of a conveyor belt (10) having a longitudinal axis and a plurality of elongate magnetically permeable reinforcing cords (11) substantially parallel to said axis covered with non-magnetic material, said method being characterised by the steps of locating of magnetically permeable yoke (2) adjacent one surface of said conveyor belt (10), said yoke (2) having a substantially U-shaped cross-section in a direction substantially parallel to said longitudinal axis and extending substantially perpendicularly to said axis; forming a plurality of pairs of pole pieces (5) by slots (4) in said yoke (2), each pair of pole pieces being aligned in a direction parallel to said axis; providing one pole piece of each of said pair of pole pieces (5) with a field winding (6) and the other pole piece of each said pair of pole pieces with a corresponding sensing winding (7); causing relative movement between said conveyor belt (10) and said yoke (2) whilst maintaining a substantially constant spacing between said yoke (2) and said conveyor belt (10); supplying a time varying electric current to each of said field windings (6) to induce a time varying magnetic field between the pole pieces (5) of each pair of pole pieces, said magnetic field passing through said cords (11); and sensing changes in the voltage induced in each of said sensing windings (7) caused by changes in the reluctance path containing said yoke (2) and said cords (11).

18. The method as claimed in claim 17 characterised in that the voltages induced in all said sensing windings (7) are added together in phase.

19. The method as claimed in claim 17 characterised in that a further yoke (12) is located adjacent the other surface of said conveyor belt (10), said yoke (2) and said further yoke (12) being substantially identical; said time varying electric current is supplied to each of the field windings (6B) of said further yoke (12) to induce a further time varying magnetic field between the pole pieces (5B) of each pair of pole pieces of said further yoke (12), said further magnetic field passing through said cords (11); and sensing changes in the voltages induced in each of the sensing windings (7B) of said further yoke (12) caused by changes in the reluctance path containing said further yoke (12) and said cords (11).

20. The method as claimed in claim 19 characterised in that the voltages induced in all said sensing windings (7A, 7B) are added together with the voltages induced in the sensing windings (7A) of said yoke (2) being added in phase and the voltages induced in the sensing windings (7B) of said further yoke (12) being added in anti-phase.

21. The method as claimed in claim 19 or 20 characterised in that said yoke (2) and said further yoke (12) are carried by a wheeled carriage (3) supported on an upper surface of said conveyor belt.

22. The method as claimed in any one of claims 17 to 21 characterised in that said time varying electric current has a frequency in the range of from 50 Hz to 50 kHz.

23. The method as claimed in claim 22 characterised in that said time varying electric current is amplitude modulated.

## Patentansprüche

1. Vorrichtung zur Überwachung der Integrität eines länglichen, magnetisch leitenden Körpers, der eine Längsachse aufweist; mit einem magnetisch leitenden Joch, das neben dem länglichen Körper positionierbar ist und einen U-förmigen Querschnitt etwa parallel zur Längsachse, im wesentlichen parallel mit der Längsachse ausgerichtete Polstücke, eine Erregerwicklung und eine Lesewicklung aufweist; mit einer Stromquelle, die an die Erregerwicklung angeschlossen ist, um in dem zwischen den Polstücken durchlaufenden, länglichen Körper ein sich zeitlich änderndes Magnetfeld zu erzeugen; mit einer Leseeinrichtung, die an die Lesewicklung angeschlossen ist, um die in dieser durch das Magnetfeld induzierte Spannung auszuwerten; und mit einer Abstandshalteeinrichtung (3), die einen im wesentlichen vorbestimmten Abstand zwischen dem länglichen Körper (11, 44) und dem Joch (2, 40) enthält und eine Relativbewegung zwischen beiden in Richtung der Längsachse des länglichen Körpers (11, 44) zuläßt; dadurch gekennzeichnet, daß sich das Joch (2, 40) etwa rechtwinklig zu der Längsachse erstreckt und mehrere Paare von Polstücken (5, 42) aufweist, die Erregerwicklungen (6) und Lesewicklungen (7) tragen; daß die Paare von Polstücken (5, 42) durch Schlitze (4, 41) in dem Joch (2, 40) gebildet sind und jedes der Paare von Polstücken (5, 42) in einer Richtung ausgerichtet ist, die im wesentlichen parallel zur Längsachse des länglichen Körpers verläuft; und daß das eine Polstück jedes Paares von Polstücken (5, 42) eine der Erregerwicklungen (6) und das andere Polstück jedes Polstückpaares (5, 42) die entsprechende Lesewicklung (7) trägt.

2. Vorrichtung nach Anspruch 1, dadurch gekennzeichnet, daß das Joch (40) ringförmig ausgebildet ist und die Schlitze (41) im wesentlichen radial verlaufen, und daß die Polstücke (42) eine innere, im wesentlichen koaxiale, zylindrische Öffnung zur Aufnahme des länglichen, magnetischen Körpers (44) bilden.

3. Vorrichtung nach Anspruch 2, dadurch gekennzeichnet, daß das Joch (40) aus mindestens zwei Teilen (43) besteht, die gegeneinander derart beweglich sind, daß das Joch geöffnet und geschlossen werden kann, um es um den länglichen, magnetischen Körper (44) zu legen.

4. Vorrichtung nach Anspruch 1, dadurch gekennzeichnet, daß das Joch (2) aus einem im wesentlichen geraden U-förmigen Kanal besteht, aus dessen Seiten Schlitze (4) herausgeschnitten sind, um die Paare von Polstücken (5) zu bilden.

5. Vorrichtung nach Anspruch 4, dadurch gekennzeichnet, daß die Erregerwicklungen (6) in Serie an die Stromquelle (14) und die Lesewicklungen (7) in Serie an die Leseeinrichtung (16, 17) angeschlossen sind.

6. Vorrichtung nach Anspruch 4 oder 5, dadurch gekennzeichnet, daß der längliche, magnetisch leitende Körper ein Transportband (10) mit länglichen, magnetisch leitenden Armierungen (11) ist und daß die Abstandshalteeinrichtung aus einem mit Rädern versehenen Trägerschlitten (3) besteht, der das Joch (2) trägt, auf einer Oberfläche des Transportbandes (10) positionierbar und von diesem getragen wird, wobei das Joch (2) sich quer zum Transportband (10) erstreckt.

7. Vorrichtung nach Anspruch 6, dadurch gekennzeichnet, daß der Trägerschlitten ein weiteres, im wesentlichen gleiches Joch (12) enthält, daß diese beiden Joche (2, 12) im wesentlichen parallel zueinander angeordnet sind und daß das weitere Joch (12) neben der anderen Oberfläche des Transportbandes angeordnet ist.

8. Vorrichtung nach Anspruch 7, dadurch gekennzeichnet, daß die Leseeinrichtung (16) die Ausgangssignale aller Lesewicklungen (7) zusammen mit den Ausgangssignalen der Lesewicklungen (7B) des weiteren Joches (12) in Gegenphase addiert.

9. Vorrichtung nach einem oder mehreren der Ansprüche 1 bis 8 dadurch gekennzeichnet, daß die Stromquelle ein Oszillator (14) mit einer Frequenz von 50 Hz bis 50 kHz ist.

10. Vorrichtung nach Anspruch 9, dadurch gekennzeichnet, daß das Ausgangssignal des Oszillators (14) amplitudenmoduliert ist.

11. Vorrichtung nach Anspruch 9 oder 10, dadurch gekennzeichnet, daß die Leseeinrichtung (17) auf die Frequenz des Oszillators (14) abgestimmt ist und einen Amplitudendetektor (17) hat.

12. Vorrichtung nach Anspruch 11, dadurch gekennzeichnet, daß die Leseeinrichtung eine logische Schaltung (19, 20) aufweist, die ein digitales Ausgangssignal abhängig von der Reluktanz des magnetisch leitenden Körpers (11) liefert.

13. Vorrichtung nach einem oder mehreren der Ansprüche 4 bis 12, dadurch gekennzeichnet, daß jedes der Paare von Polstücken (5) einen im wesentlichen rechteckförmigen Teil des Joches (2) mit im wesentlichen konstanter Dicke (T) bildet, daß die Höhe (H) jedes der Polstücke (5) etwa die Hälfte des Abstandes (W) zwischen den Polstücken und die Dicke (T) des Teils etwa ein Zehntel der Höhe (H) beträgt, daß die Länge (L) jedes der Polstücke (5) etwa rechtwinklig zur Längsachse etwa 1,75-fachen des Abstandes (W) zwischen den Polstücken entspricht, und daß der vorbestimmte Abstand (G) zwischen den Polstücken (5) und dem länglichen Körper (11) etwa einem Fünftel des Abstandes (W) zwischen den Polstücken (5) entspricht.

14. Vorrichtung nach einem oder mehreren der Ansprüche 1 bis 13, dadurch gekennzeichnet, daß der längliche, magnetisch leitende Körper (11, 44) durch eine nichtmagnetisches Material abgedeckt ist.

15. Vorrichtung nach Anspruch 9, dadurch gekennzeichnet, daß die Leseeinrichtung einen an die Lesewicklungen (7) angeschlossenen Wechselspannungsdetektorkreis (16) enthält, der das Abfallen der induzierten Spannung unter einen vorbestimmten Wert für eine bestimmte Zeit feststellt.

16. Vorrichtung nach Anspruch 15, dadurch gekennzeichnet, daß der Wechselspannungsdetektorkreis (16) eine Integratorschaltung enthält, mit der die induzierte Spannung über einen längeren Zeitraum integriert wird, um einen Referenzwert bereitzustellen;

daß eine Vergleichsschaltung zum Vergleich des Referenzwertes mit der im wesentlichen augenblicklich induzierten Spannung vorgesehen ist;

und daß eine Ausgabeschaltung vorgesehen ist, die dann ein Signal abgibt, wenn die im wesentlichen augenblicklich induzierte Spannung um einen bestimmten Grad unter den Referenzwert abfällt.

17. Verfahren zur Überwachung der Integrität eines Transportbandes (10) mit einer Längsachse und einer Mehrzahl von länglichen, magnetisch leitenden Armierungsfasern (11), die im wesentlichen parallel zur Längsachse verlaufen und mit einem nichtmagnetischen Material abgedeckt sind,

dadurch gekennzeichnet, daß ein magnetische leitendes Joch (2) über einer Oberfläche des Transportbandes (10) positioniert wird, wobei dieses Joch (2) einen im wesentlichen U-förmigen Querschnitt in einer Richtung im wesentlichen parallel zur Längsachse hat und sich im wesentlichen rechtwinklig zu der Längsachse erstreckt;

daß mehrere Paare von Polstücken (5) durch Schlitze (4) in dem Joch (2) gebildet werden, wobei jedes Paar von Polstücken in einer Richtung parallel zur Längsachse ausgerichtet ist;

daß ein Polstück jedes Paares von Polstücken (5) mit einer Erregerwicklung (6) und das andere Polstück jedes Paares von Polstücken mit einer entsprechenden Lesewicklung (7) versehen wird;

daß eine Relativbewegung zwischen dem Transportband (10) und dem Joch (2) durchgeführt wird, wobei zwischen dem Joch (2) und dem Transportband (10) ein im wesentlichen konstanter Abstand aufrechterhalten wird;

daß jeder der Erregerwicklungen (6) ein sich zeitlich ändernder elektrischer Strom zugeführt wird, um zwischen den Polstücken jedes der Paare von Polstücken ein sich zeitlich änderndes Magnetfeld zu erzeugen, wobei das Magnetfeld die Armierungsfasern (11) durchläuft; und

daß die Änderungen der in jeder der Lesewicklungen (7) induzierten Spannungen ausgewertet werden, die durch Änderungen der Reluktanz im Magnetkreis aus dem Joch (2) und den Armierungsfasern (11) hervorgerufen werden.

18. Verfahren nach Anspruch 17, dadurch gekennzeichnet, daß die in allen Lesewicklungen (7) induzierten Spannungen in Phase addiert werden.

19. Verfahren nach Anspruch 17, dadurch gekennzeichnet, daß eine weiteres Joch (12) über der anderen Oberfläche des Transportbandes (10) angeordnet wird, wobei beide Joche (2, 12) im wesentlichen gleich ausgebildet sind;

daß der sich zeitlich ändernde elektrische Strom jeder der Erregerwicklungen (6B) des weiteren Joches (12) zugeführt wird, um zwischen den Polstücken (5B) jedes der Paare von Polstücken des weiteren Joches (12) ein sich zeitlich änderndes, weiteres Magnetfeld zu erzeugen, wobei das weitere Magnetfeld die Armierungsfasern (11) durchläuft;

und daß die Änderungen der in jeder der Lesewicklungen (7B) induzierten Spannungen des weiteren Joches (12) ausgewertet werden, die durch die Änderungen der Reluktanz im Magnetkreis aus dem weiteren Joch (12) und den Armierungsfasern (11) hervorgerufen werden.

20. Verfahren nach Anspruch 19, dadurch gekennzeichnet, daß die in allen Lesewicklungen (7A, 7B) induzierten Spannungen addiert werden, wobei die in den Lesewicklungen (7A) des einen Joches (2) in Phase und die in den Lesewicklungen (7B) des weiteren Joches (12) in Gegenphase addiert werden.

21. Verfahren nach Anspruch 19 oder 20, dadurch gekennzeichnet, daß das eine Joch (2) und das weitere Joch (12) auf einem mit Rädern versehenen Tragschlitten (3) angeordnet sind, der sich auf einer Oberfläche des Transportbandes abstützt.

22. Verfahren nach einem der oder mehreren der Ansprüche 17 bis 21, dadurch gekennzeichnet, daß der sich zeitlich ändernde elektrische Strom eine Frequenz im Bereich von 50 Hz bis 50 kHz hat.

23. Verfahren nach Anspruch 22, dadurch gekennzeichnet, daß der sich zeitlich ändernde elektrische Strom amplitudenmoduliert ist.

**Revendications**

1. Appareil pour contrôler l'intégrité d'un organe allongé, magnétiquement perméable, ayant un axe longitudinal, l'appareil comprenant une culasse magnétiquement perméable pour positionner l'organe allongé adjacent, la culasse ayant une section droite en forme de U en substance parallèle à l'axe et des pièces polaires alignées en substance parallèles à l'axe, un bobinage de champ et un bobinage senseur; un organe de production de courant connectée au bobinage de champ pour induire un champ magnétique variant dans le temps à travers l'organe allongé entre les pièces polaires; un senseur connecté au bobinage senseur pour détecter la tension induite dans celui-ci par le champ magnétique, un organe d'espacement (3) conçu pour maintenir un espacement en substance prédéterminé entre l'organe allongé (11, 44) et la culasse (2, 40) et pour permmettre un mouvement relatif entre eux dans la direction de l'axe longitudinal de l'organe allongé (11, 44); caractérisé en ce que la culasse (2, 40) est disposée en substance perpendiculairement à l'axe et a plusieurs paires de pièces polaires (5, 42) présentant des bobinages de champ (6) et des bobinages senseurs (7), lesdites plusieurs paires de pièces polaires (5, 42) étant formées par des encoches (4, 41) dans la culasse (2, 40), et chaque paire de pièces polaires (5, 42) étant alignée dans une direction en substance parallèle à l'axe longitudinal de l'organe allongé, une pièce polaire de chaque paire de pièces polaires (5, 42) étant pourvue des bobinages de champ (6) et l'autre pièce polaire de chaque paire de pièces polaires (5, 42) étant pourvue d'un bobinage senseur correspondant des bobinage senseurs (7).

2. Appareil selon la revendication 1, caractérisé en ce que la culasse (40) est annulaire, en ce que les encoches (41) sont en substance radiales et en ce que les pièces polaires (42) définissent une cavité cylindrique intérieure, en substance coaxiale, conçue pour recevoir l'organe magnétique allongé.

3. Appareil selon la revendication 2, caractérisé en ce que la culasse (40) se compose d'au moins deux sections mobiles (43) l'une par rapport à l'autre, si bien que la culasse peut être ouverte et fermée pour mettre en place la culasse (40) autour de l'organe magnétique allongé (44).

4. Appareil selon la revendication 1, caractérisé en ce que la culasse (2) comprend un profilé en substance droit en forme de U, pourvu d'encoches (4) découpées dans ses côtés pour former les paires de pièces polaires (5).

5. Appareil selon la revendication 4, caractérisé en ce que les bobinages de champ (6) sont connectés ensemble en série aux bornes de l'organe de production de courant (14) et en ce que les bobinages senseurs (7) sont connectés ensemble en série aux bornes du senseur (16, 17).

6. Appareil selon l'une quelconque des revendications 4 et 5, caractérisé en ce que l'organe permable allongé se compose d'une courroie transporteuse (10) dotée d'éléments de renforcement perméables allongés (11) et en ce que l'organe d'espacement est constitué d'un chariot (3) à roues supportant la culasse (2) et conçu pour être positionné sur une surface de la courroie transporteuse (10) et soutenu par celle-ci, la culasse (2) étant disposée transversalement à la courroie (10).

7. Appareil selon la revendication 6, caractérisé en ce que le chariot comprend une autre culasse (12) en substance identique, la culasse (2) et l'autre culasse (12) étant en substance parallèles, l'autre culasse (12) étant adjacente à l'autre surface de la courroie (10).

8. Appareil selon la revendication 7, caractérisé en ce que le senseur (16) additionne la sortie de tous les bobinages senseurs (7) ensemble, la sortie des bobinages senseurs (7B) de l'autre culasse (12) étant additionnée en phase opposée.

9. Appareil selon l'une quelconque des revendications 1 à 8, caractérisé en ce que l'organe de production de courant comprend un oscillateur (14) ayant une fréquence de 50 Hz à 50 kHz.

10. Appareil selon la revendication 9, caractérisé en ce que la sortie de l'oscillateur (14) est modulée en amplitude.

11. Appareil selon l'une quelconque des revendications 9 et 10, caractérisé en ce que le senseur (17) est accordé à la fréquence de l'oscillateur (14) et comprend un détecteur d'amplitude (17).

12. Appareil selon la revendication 11, caractérisé en ce que le senseur comprend un circuit logique (19, 20) ayant une sortie numérique dépendant de la reluctance de l'organe perméable allongé (11).

13. Appareil selon l'une quelconque des revendications 4 à 12, caractérisé en ce que chaque paire de pièces polaires (5) comprend une partie en général rectangulaire de la culasse (2) et a une épaisseur (T) en substance constante; en ce que la hauteur (H) de chaque pièce polaire (5) est approximativement la moitié de la distance (W) entre les pièces polaires, l'épaisseur (T) de la partie est approximativement un dixième de la hauteur (H), la longueur (L) de chaque pièce polaire (5) en substance perpendiculaire à l'axe est approximativement une et trois-quarts de fois la distance (W) entre les pièces polaires; et l'espacement prédéterminé (G) entre les pièces polaires (5) et l'organe allongé (11) est approximativement un cinquième de la distance (W) entre les pièces polaires (5).

14. Appareil selon l'une quelconque des revendications 1 à 13, caractérisé en ce que l'organe allongé, magnétiquement perméable (11, 44) est recouvert d'une matière non magnétique.

15. Appareil selon la revendication 9, caractérisé en ce que le senseur comprend un circuit détecteur à courant alternatif connecté aux bobinages senseurs pour détecter la chute de la tension induite en dessous d'un niveau prédéterminé pendant un temps prédéterminé.

16. Appareil selon la revendication 15, caractérisé en ce que le circuit détecteur à courant alternatif (16) comprend un circuit intégrateur pour intégrer la tension induite sur une période prolongée en vue d'établir un niveau de transmission de référence, un comparateur pour comparer le niveau de référence à la tension induite en substance instantanée, et un organe de sortie pour signaler que la tension induite en substance instantanée tombe en dessous du niveau de référence d'un degré prédéterminé.

17. Procédé de contrôle de l'intégrité d'une courroie transporteuse (10) ayant un axe longitudinal et plusieurs cordons (11) de renforcement allongés, magnétiquement perméables, en substance parallèles à l'axe et revêtus d'une matière non magnétique, caractérisé en ce qu'il consiste à disposer une culasse (2) magnétiquement perméable d'une façon adjacente à une surface de la courroie transporteuse (10), la culasse (2) ayant une section droite en substance en forme de U dans une direction en substance parallèle à l'axe longitudinal et se situant en substance perpendiculairement à l'axe; à créer plusieurs paires de pièces polaires (5) en formant des encoches dans la culasse (2), chaque paire de pièces polaires étant alignée dans une direction parallèle à l'axe; à doter une pièce polaire de chaque paire de pièces polaires (5) d'un bobinage de champ (6) et l'autre pièce polaire de chaque paire de pièces polaires d'un bobinage senseur correspondant (7); à établir un mouvement relatif entre la courroie transporteuse (10) et la culasse (2), tout en maintenant un espacement en substance constant entre la culasse (2) et la courroie transporteuse (10); à fournir un courant électrique variant dans le temps à chacun des bobinages de champ (6) pour induire un champ magnétique variant dans le temps entre les pièces polaires (5) de chaque paire de pièces polaires, le champ magnétique passant par les cordons (11); et à détecter les variations de tension induites dans chacun des bobinages senseurs (7) produites par les modifications du parcours de reluctance contenant la culasse (2) et les cordons (11).

18. Procédé selon la revendication 17, caractérisé en ce que les tensions induites dans tous les bobinages senseurs (7) sont additionnées ensemble en phase.

19. Procédé selon la revendication 17, caractérisé en ce qu'une autre culasse (12) est disposée d'une manière adjacente à l'autre surface de la courroie transporteuse (10), la culasse (2) et l'autre culasse (12) étant en substance identiques; en ce que du courant électrique variant dans le temps est fourni à chacun des bobinages de champ (6B) de l'autre culasse (12) pour induire un autre champ magnétique variant dans le temps entre les pièces polaires (5B) de chaque paire de pièces polaires de l'autre culasse (12), l'autre champ magnétique passant par les cordons (11); et en ce qu'on détecte les variations des tensions induites dans chacun des bobinages senseurs (7B) de l'autre culasse (12) produites par les modifications du parcours de reluctance contenant l'autre culasse (12) et les cordons (11).

20. Procédé selon la revendication 19, caractérisé en ce que les tensions induites dans tous les bobinages senseurs (7A, 7B) sont additionnées ensemble, les tensions induites dans les bobinages senseurs (7A) de la culasse (2) étant additionnées, en phase et les tensions induites dans les bobinages senseurs (7B) de l'autre culasse (12) étant additionnées en phase opposée.

21. Procédé selon l'une quelconque des revendications 19 et 20, caractérisé en ce que la culasse (2) et l'autre culasse (12) sont soutenues par un chariot (3) à roues posé sur une surface supérieure de la courroie transporteuse.

22. Procédé selon l'une quelconque des revendications 17 à 21, caractérisé en ce que le courant électrique variant dans le temps a une fréquence de l'ordre de 50 Hz à 50 kHz.

23. Procédé selon la revendication 22, caractérisé en ce que le courant électrique variant dans le temps est modulé en amplitude.

FIG.1

FIG.2

0 027 368

FIG.3

FIG. 8

FIG.4

4

FIG. 5

0 027 368

FIG. 6

0 027 368

FIG.7

FIG. 9

FIG. 10

FIG. 11

10

FIG. 12

32

70

60

0 027 368

0 027 368

# FIG. 13

FIG. 14

31  32  33

FIG.15

32

33

0 027 368

FIG.16